# EUROPÄISCHE PATENTSCHRIFT

(11) **EP 2 497 726 B1**
(45) Veröffentlichungstag und Bekanntmachung des Hinweises auf die Patenterteilung: **14.01.2015**
(21) Anmeldenummer: 12157908.0
(22) Anmeldetag: 02.03.2012
(51) Int. Cl.: B65G 15/36, B65G 35/06

(54) **Matte für den Transport von mindestens einem Gegenstand, Übergabevorrichtung und Verfahren zur Übergabe**
Mat for the transport of at least one object, transfer device and method for transferring
Tapis pour le transport d'au moins un objet, dispositif et procédé de transfert

(30) Priorität: 11.03.2011 DE 102011005397
(43) Veröffentlichungstag der Anmeldung: 12.09.2012
(73) Patentinhaber: Krones AG, 93073 Neutraubling (DE)
(72) Erfinder: Olszak, Tilo, 80687 München (DE)
(74) Vertreter: Grünecker, Kinkeldey, Stockmair & Schwanhäusser

(56) Entgegenhaltungen:
- EP-A1- 0 059 947
- DE-A1- 2 557 025
- DE-A1- 2 653 159
- DE-A1- 3 608 217
- GB-A- 2 082 116

## Beschreibung

Die Erfindung betrifft eine Matte für den Transport von mindestens einem Gegenstand und eine Übergabevorrichtung sowie ein Verfahren zur Übergabe.

Beispielsweise in der Lebensmittelindustrie werden Gegenstände verschiedener Größe, Form und Verpackungsart, sowie unterschiedlichen Gewichts bewegt. Für den Transport solcher Gegenstände können im Herstellungs-, Verpackungs- und/oder Vertriebsbereich Fördereinrichtungen, wie Förderbänder, Rollenförderer und/oder (modulare) Fördermatten verwendet werden.

GB 2 082 116 A offenbart ein Transportband, das mindestens eine Matte aus elastischem Material, in der eine Vielzahl von verstärkenden Elementen nebeneinander mit einem Anstand durch das elastische Material gehalten werden und eine weitere Materiallage umfasst. Die mindestens eine Matte erstreckt sich in der Länge des Transportbands, und jedes verstärkende Element erstreckt sich quer zur Länge des Transportbands.

DE 25 57 025 offenbart einen Fördergurt aus Gummi, der in Längsrichtung parallel zueinander angeordnete eingebettet Drahtseile und beiderseits der Drahtseile zusätzliche Verstärkungseinlagen umfasst, wobei die Verstärkungseinlagen unterhalb der Drahtseile aus einem Werkstoff höherer elastischer Dehnfähigkeit als die Verstärkungseinlagen oberhalb der Drahtseile bestehen.

EP 0 059 947 A1 offenbart ein Band, das zwei seitliche Zonen und eine zentrale Zone umfasst, wobei die Zonen ein elastomeres Material umfassen und wobei in die zentrale Zone eine zugbeständige Struktur eingebracht ist, die aus einer Vielzahl von zueinander parallelen und koplanaren Seilen besteht, die in Längsrichtung des Bands ausgerichtet sind. In den seitlichen Zonen können auch Seile angeordnet sein, die eine kleinere Dehnbarkeit als die Seile in der zentralen Zone aufweisen.

DE 36 08 217 A1 offenbart ein Transportsystem, bei dem in ein stationäres System mit zwei übereinander angeordneten gegenläufigen Förderstrecken Fahrzeuge integriert sind, die Ladeflächen in der jeweiligen Höhe aufweisen und beladen und entladen werden können. Wird an der Umladestation eine Last entnommen, werden anschließend beide Förderer angetrieben, um den leeren Lastträger auf den Rücklaufförderer zu bringen und ihn in die Reihe der dort vorhandenen Lastträger einzureihen. Wird ein voller Lastträger auf die Transportstrecke übernommen, so wird gleichzeitig ein leerer Lastträger vom Rücklaufförderer auf das Fahrzeug abgegeben.

DE 26 53 159 offenbart ein Bandmaterial aus Gummi mit in mehreren Schichten eingebetteten Verstärkungseinlagen, z.B. Seile aus natürlichen oder synthetischen Fasern, Monofilamente, Stahlcord, Gewebe mit offenen oder geschlossenen Maschen, wobei auf Bänder dieses Materials auf eine Seite Platten dieses Materials fest aufgebracht werden können. Aufgabe der Erfindung ist es, einen Transport von schweren und/oder leichten, großen und/oder kleinen Gegenständen auf eine sichere, wartungsarme und flexible Weise zu gewährleisten.

Diese Aufgabe wird gelöst durch die Matte nach Anspruch 1 und die Übergabevorrichtung nach Anspruch 5 oder 8 sowie durch ein Übergabeverfahren nach einem der Ansprüche 12 oder 16. Bevorzugte Ausführungsformen sind in den abhängigen Ansprüchen dargelegt.

Die Erfindung betrifft eine Matte (auch Tablar genannt) für den Transport von mindestens einem Gegenstand, vorzugsweise von mindestens einem Gebinde in der Lebensmittelindustrie, auf einer Oberfläche der Matte, wobei die Matte elastisches Material umfasst, wobei in der Matte Versteifungen wie Stäbe, Materialien mit höherem Härtegrad als das elastische Material oder Hohlräume, Gewebe, Fasern, die zu Versteifungen führen, vorgesehen sind, die von dem elastischen Material zumindest teilweise umgeben sind, wobei die Versteifungen vorzugsweise parallel zueinander ausgerichtet sind und wobei das elastische Material und die Versteifungen so zusammenwirken, dass eine Biegung der Matte mit einem ersten Krümmungsbogen in einer ersten Ebene unter geringerem Kraftaufwand erfolgen kann als mit einem zweiten Krümmungsbogen in einer zweiten Ebene, wobei die erste Ebene und die zweite Ebene verschieden sind. In einem kartesischen Koordinatensystem werden beispielsweise die erste Ebene durch die Achsen x und z und die zweite Ebene durch die Achsen y und z aufgespannt. Der erste und der zweite Krümmungsbogen haben dabei die gleiche Form, liegen jedoch in verschiedenen Ebenen.

Das Material der Versteifungen weist vorzugsweise eine höhere Biegefestigkeit als das elastische Material auf.

Das elastische Material, zum Beispiel ein Zäh-Elastomer, der Matte weist eine Elastizität auf, so dass unter dem Einfluss äußerer Kräfte Form- und Volumenänderungen auftreten kön-nen, wobei mit dem Verschwinden der äußeren Kräfte die Deformationen verschwinden. Da auf der Oberfläche der Matte mindestens ein Gegenstand transportiert werden soll, ist es vorteilhaft, wenn das elastische Material zudem eine gewisse Härte (beispielsweise gemessen nach DIN 53505, DIN 7868) aufweist, beispielsweise Shore D von mehr als 45. Es kann aber auch ein elastisches Material eingesetzt werden, das eine geringere Härte (zum Beispiel kleinere Werte von Shore D oder Shore A) aufweist.

Durch diese Härte kann gewährleistet werden, dass der mindestens eine Gegenstand nicht in solch einer Weise die Oberfläche der Matte eindrückt (durch die Gewichtskraft des Gegenstands), dass beispielsweise bei einer ungleichen Massenverteilung in einem Gebinde eine verschieden tiefe Eindrucktiefe und somit eine schiefe Lagerung des Gebindes auf der Matte vermieden werden kann.

Die Versteifungen, die in der Matte parallel zueinander ausgerichtet sind, können in besonderem Maße dazu dienen, der Matte für den Transport von mindestens einem Gegenstand mehr Stabilität in Bezug auf Formveränderungen zu geben und dabei trotzdem die elastischen Eigenschaften des elastischen Materials nutzen zu können.

Eine Matte, die nur ein elastisches Material, aber keine Versteifungen umfasst, kann auch zu einem Transport von Gegenständen verwendet werden, jedoch ist der aufzuwendende Kraftaufwand für die Biegung mit einem ersten Krümmungsbogen in einer ersten Ebene und für die Biegung mit einem zweiten Krümmungsbogen gleicher Form in einer zweiten Ebene, wobei die erste und die zweite Ebene verschieden sind, gleich groß.

Die erfindungsgemäße Matte bietet durch die in ihr umfassten Versteifungen unterschiedliche Biegeeigenschaften, wie z.B. verschiedene Biegesteifigkeiten, in verschiedenen Richtungen auf. Besitzt die Matte eine quaderförmige Form mit einer Oberseite, einer Unterseite und vier Seitenflächen, so können die z.B. in einer Transportrichtung (x-Achse) rechte und die linke Kante der Oberfläche senkrecht zu den Versteifungen verlaufen und die vordere und die hintere Kante der Oberfläche parallel zu den Versteifungen verlaufen.

Um einen ersten Krümmungsbogen zu erzeugen, können die vordere und die hintere Kante (z.B. parallel zu y-Achse) einander angenähert werden, wobei diese Kanten weiterhin parallel zueinander verlaufen. Dieser erste Krümmungsbogen verläuft dann in einer Ebene (aufgespannt durch x- und z-Achse), die senkrecht zu den Längsachsen der Versteifungen (y-Achse) verläuft.

Um einen zweiten Krümmungsbogen zu erzeugen, können die rechte und die linke Kante (z.B. parallel zu x-Achse) einander angenähert werden, wobei diese Kanten weiterhin parallel zueinander verlaufen. Dieser zweite Krümmungsbogen verläuft dann in einer Ebene (aufgespannt durch y- und z-Achse), die parallel zu den Längsachsen der Versteifungen verläuft. Für die Erzeugung des zweiten Krümmungsbogens ist ein größerer Kraftaufwand notwendig als für die Erzeugung des ersten Krümmungsbogens gleicher Form, da die Versteifungen eine größere Biegefestigkeit als das elastische Material aufweisen.

Solch ein Verhalten der Matte kann sich als vorteilhaft erweisen, da sie in zwei senkrecht aufeinander stehenden Richtungen ihrer Oberfläche unterschiedlich leicht gebogen werden kann. Dieses Verhalten ist auch gegeben, wenn die Matte nicht quaderförmig ist, d.h. keine rechtwinklige Oberfläche umfasst, sondern beispielsweise eine elliptische, runde oder trapezförmige Oberfläche umfasst. Damit die Matte für den Transport von mindestens einem Gegenstand in einem gebrauchsfähigem Zustand verbleibt, ist das Ergebnis einer Biegung der Matte vorzugsweise reversibel, d.h. es sollte beispielsweise zu keiner irreversiblen Verformung der Versteifungen kommen.

Die Versteifungen können ganz oder teilweise von dem elastischen Material umgeben sein. Vorzugsweise sind sie entlang ihre Längsrichtung (y-Achse) gänzlich von dem elastischen Material umgeben. An den Querschnittsflächen können die Versteifungen beispielsweise im Randbereich der Matte enden und somit in diesem Bereich nicht von elastischem Material umgeben sein. Es kann vorgesehen sein, dass ein erster Abstand zwischen der Oberfläche der Matte und den Versteifungen und ein zweiter Abstand zwischen der Unterfläche der Matte und den Versteifungen gleich groß oder verschieden groß ist. Der erste Abstand kann hierbei definiert werden durch den minimalen Abstand zwischen einem Punkt, der sich ergibt, wenn eine Senkrechte (z-Achse) durch die Oberfläche der Matte gelegt wird, die einen oder mehrere Schnittpunkte mit dem Stab und/oder einen oder mehrere Berührungspunkte mit dem Stab aufweist und dem Schnittpunkt mit der Oberfläche. Der zweite Abstand kann entsprechend definiert werden, wenn eine Senkrechte durch die Unterfläche der Matte gelegt wird

Eine Richtung einer Längsausdehnung (y-Achse) der Versteifungen kann sich senkrecht zu der ersten Ebene (aufgespannt durch x- und z-Achse) erstrecken. Die Versteifungen können parallel zu einer Kante der Oberfläche der Matte verlaufen und vorzugsweise können sie die Länge dieser Kante aufweisen. Die Versteifungen können aber auch kürzer oder länger als die Längen dieser Kante sein. Es ist auch möglich, dass die Versteifungen unterschiedliche Längen aufweisen oder alle gleich lang sein.

Benachbarte Versteifungen in der Matte können jeweils einen gleichen Mitte-zu-Mitte Abstand aufweisen oder benachbarte Versteifungen können unterschiedliche Mitte-zu-Mitte Abstände aufweisen. Der Ausdruck "unterschiedlich" soll hierbei bedeuten, dass beispielsweise drei Versteifungen einen ersten Wert des Mitte-zu-Mitte Abstands aufweisen (d.h. es tritt zweimal der erste Wert des Mitte-zu-Mitte Abstands auf) und dass die restlichen Versteifungen jeweils Mitte-zu-Mitte Abstände aufweisen, die von diesem ersten Wert verschieden sind. Es ist aber auch möglich, dass alle Versteifungen jeweils verschiedene oder gleiche Werte des Mitte-zu-Mitte Abstands aufweisen.

Der Mitte-zu-Mitte Abstand der einzelnen Versteifungen untereinander kann entsprechend der zu transportierenden Gegenstände gewählt werden. Je nach der Masse pro Flächeneinheit eines Gegenstands kann ein größerer oder ein kleinerer Mitte-zu-Mitte Abstand der Versteifungen vorteilhaft sein.

Das Verhältnis des Mitte-zu-Mitte Abstands zu einem Durchmesser eines Stabs kann im Bereich von 2,5:1 bis 5:1 liegen; es können aber auch andere Werte vorgesehen sein. Das Verhältnis des Durchmesser des Stabs zu einer Dicke der Matte kann im Bereich von 1:2 bis 1:5 liegen; es können aber auch andere Werte vorgesehen sein.

Die Versteifungen sind vorzugsweise parallel zueinander (y-Achse) ausgerichtet, sie können aber auch, aus der y-Achse um 0,1 bis etwa 15 Winkelgrad in Richtung der x- und/oder z-Achse ausgelenkt und/oder nur annähernd parallel zueinander sein. Auch müssen die Versteifungen nicht geradlinig sein, sondern können auch gekrümmt oder gebogen sein. Sie können jedoch auch geradlinig sein.

Die Versteifungen können aus Metall bestehen oder sie können Metall umfassen. Das Metall weist vorzugsweise eine gewisse Steifigkeit auf, so dass es sich nicht verformt, wenn ein zu transportierender Gegenstand auf die Matte aufgebracht wird. Beispielsweise kann das Metall eine Elastizitätsmodul im Bereich von etwa 1,4·10⁵ N/mm² bis etwa 2,1·10⁵ N/mm² aufweisen.

Der Betrag des Elastizitätsmoduls ist umso größer, je mehr Widerstand ein Material seiner Verformung entgegensetzt. Ein Material mit hohem Elastizitätsmodul kann also als steif bezeichnet werden, ein Material mit niedrigem Elastizitätsmodul kann als nachgiebig bezeichnet werden. Der Elastizitätsmodul ist als Steigung des Graphen im Spannungs-DehnungsDiagramm bei einachsiger Belastung innerhalb des linearen Elastizitätsbereichs definiert.

Die Versteifungen können aus kohlestofffaserverstärktem Material bestehen oder kohlestofffaserverstärktes Material umfassen, und die Versteifungen können vorzugsweise weiterhin Metall umfassen. Durch die Verwendung von kohlestofffaserverstärktem Material kann das Gewicht der Versteifungen und somit auch der Matte kleiner gehalten als im Vergleich zu der Verwendung von massiven Metallversteifungen. Das kohlestofffaserverstärkte Material weist vorzugsweise ein Elastizitätsmodul von mindestens 1,4·10⁵ N/mm² (parallel zu den Fasern) auf.

Eine Gewichtsreduktion der Versteifungen kann sich aber auch ergeben, wenn anstatt massiver Versteifungen, Materialien mit höherem Härtegrad als der Härtegrad des elastischen Materials, Hohlversteifungen, Gewebeversteifungen, Faserversteifungen und/oder Versteifungen mit einer Wabenstruktur verwendet werden. Auch sind Versteifungen möglich, die Drähte, Netze, Gitter umfassen oder daraus bestehen und/oder die aus oder mit Materialien gefertigt sind, wie Metall, Nylon, Glasfasern oder Carbonfasern oder eines oder mehrere dieser Materialien umfassen.

Die Versteifungen können eine zylindrische, vorzugsweise kreiszylindrische, Form aufweisen. Die Grundfläche der zylindrischen Form kann hierbei unterschiedliche Flächenformen aufweisen. Beispielsweise sind Versteifungen mit einer elliptischen und/oder quadratischen Querschnittsfläche denkbar. In einer Matte können Versteifungen mit gleichen und/oder verschiedenen Querschnittsformen auftreten (gleiche Formen, gleiche/unterschiedliche Dimensionen). Die einzelnen Versteifungen in der Matte können hierbei als massive Versteifungen, Hohlversteifungen und/oder Hohlstäbe mit einer inneren Wabenstruktur ausgebildet sein. Die Versteifungen in einer Matte können verschiedene Arten dieser Ausführungsformen umfassen, so dass eine Matte beispielsweise massive wie auch Hohlversteifungen umfasst. Eine Matte kann aber auch Versteifungen einer einzelnen Ausführungsform umfassen.

Das elastische Material auf der Oberfläche und/oder einer Unterfläche der Matte kann eine Haftreibungszahl im trockenen Zustand der Oberfläche und/oder der Unterfläche von mindestens 0,4, insbesondere von mindestens 0,5 oder 0,6, aufweisen. Durch eine solche Haftreibungszahl kann gewährleistet werden, dass sich der Gegenstand bei einem ordnungsgemäßen Transport nicht relativ zu der Matte bewegt. Vorteilhafterweise kann eine Haftreibungszahl von mindestens 0,5 bei einer feuchten/nassen/verunreinigten Ober- und/oder Unterfläche der Matte, wobei eine Verunreinigung beispielsweise durch ausgetretene Flüssigkeit eines Gebindes zustande kam, gegeben sein.

Eine Übergabevorrichtung in Kombination mit einer erfindungsgemäßen oder anderen Matte umfasst Mittel zum Bewegen der Matte und Führungsmittel für eine Führung der Matte aus einer Transportebene hinaus. Hier kann vorzugsweise eine Matte eingesetzt werden, wie die oben oder weiter unten beschriebene Matte mit Versteifungen, oder aber auch eine Matte ohne Versteifungen. Das Material solcher Matten ist elastisch. Die Matten können z.B. aus einem Zäh-Elastomer gefertigt sein oder ein solches Material umfassen. Ohne Versteifungen weist das Material der Matten ein Biegeverhalten auf, dass in der oben beschriebenen ersten und zweiten Ebene (x-z-Ebene und y-z- Ebene) gleich ist.

Die Führungsmittel können Führungsrollen umfassen. Die Führungsrollen können eine äußere Kraft auf die Matte ausüben, beispielsweise in den Randbereichen der Matte, und durch eine entsprechende Anordnung dafür sorgen, dass die Matte aus einer Transportebene hinausbewegt wird. Vorteilhafterweise sind die Führungsrollen so angeordnet und ausgebildet, dass ein sich auf einer Oberfläche der Matte befindlicher Gegenstand bei einem Transport mittels der Matte ungehindert transportiert werden kann.

Da sich der zu transportierende Gegenstand auf der Oberfläche der Matte befindet (d.h. oberhalb der Transportebene) und von dieser Matte beispielsweise auf ein Förderband oder eine Palette verbracht werden soll, wird die Matte vorteilhafter Weise in einen Bereich unterhalb der Transportebene bewegt. Für solch eine Bewegung sind die Versteifungen in der Matte vorteilhafter Weise senkrecht zu der Transportrichtung angeordnet. Bei der Bewegung der Matte aus der Transportebene heraus wird die Matte gekrümmt.

Die Übergabevorrichtung kann weiter einen Schieber umfassen, der so ausgebildet ist, dass er den mindestens einen Gegenstand von der Matte schieben kann. Der Schieber kann vorzugsweise einen beweglichen Arm umfassen, der es ermöglicht, den Schieber so zu positionieren, dass der Schieber in Kontakt zu dem mindestens einen Gegenstand gebracht werden kann, wenn sich der Gegenstand auf der Matte befindet und mit ihm in Kontakt bleiben kann, während sich der Gegenstand zusammen mit der Matte bewegt. Der Kontakt zwischen dem Schieber und dem Gegenstand kann auch aufrecht erhalten bleiben, bis der Gegenstand von der Matte geschoben wurde und beispielsweise auf ein an die Übergabevorrichtung anschließendes Förderband oder auf eine Palette verbracht wurde. Wenn der Schieber nicht mehr benötigt wird, kann er mittels des beweglichen Arms zum Beispiel in eine Ruheposition bewegt werden. Der Schieber kann eine solche Form und Größe aufweisen, dass ein Gegenstand beispielsweise an einer Seitenfläche gestützt werden kann.

Weiter kann eine Übergabevorrichtung vorgesehen sein, mit der ein Gegenstand auf eine Matte übergeben wird. Die Matte wird dabei mit dem Gegenstand beladen. Dabei sind Mittel vorgesehen, mit denen eine Matte aus einem Bereich, in dem die Matte gekrümmt ist, in eine Transportebene gebracht werden kann. In der Transportebene ist die Matte selber eben, also nicht gekrümmt.

Der Bereich in dem die Matte gekrümmt ist, befindet sich vorteilhafterweise unterhalb der Transportebene. Das führt dazu, dass der Gegenstand ohne Kollision mit der Bahn der Matte auf die Oberseite der Matte geführt werden kann.

Der Gegenstand wird vorzugsweise auf den Bereich der Matte aufgebracht, der sich in der Transportebene befindet. Dies ermöglicht ein sicheres Aufbringen des Gegenstandes auf eine ebene Fläche der Matte, so dass in Kippeln und evtl. umfallen des Gegenstandes verhindert wird.

Um den Gegenstand in die Position auf der Matte zu bewegen, kann beispielsweise ein Schieber vorgesehen sein. Damit kann der Gegenstand mit einer wohldefinierten Geschwindigkeit bewegt werden, wobei diese Geschwindigkeit vorzugsweise der Geschwindigkeit der Matte beim Übergeben des Gegenstandes entspricht. Statt eines Schiebers oder zusätzlich kann auch eine Neigung vorgesehen sein, wie etwa eine geneigte Förderfläche, Rutsche geneigte Rollenbahn oder ähnliches, auf der der Gegenstand sich unter Einfluss der Schwerkraft in Richtung auf die Matte zubewegen kann.

Ein Verfahren zur Übergabe von mindestens einem Gegenstand, vorzugsweise von mindestens einem Gebinde in der Lebensmittelindustrie, der sich auf einer Oberfläche einer erfindungsgemäßen oder anderen Matte befindet, umfasst die folgenden Schritte:
- Bewegen der Matte in einer Transportebene und in einer Transportrichtung, wobei die Transportrichtung vorzugsweise dadurch definiert ist, dass sie senkrecht zur Längsausdehnung der Versteifungen verläuft, und
- Bewegen der Matte durch einen Bereich, der mit Führungsmitteln ausgestattet ist, und dabei Ausüben einer Kraft über mindestens einen Teil der Oberfläche der Matte auf die Matte mittels der Führungsmittel, wodurch ein erster Teil der Matte, der durch den Bereich, der mit Führungsmitteln ausgestattet ist, hindurchbewegt wurde, aus der Transportebene hinaus nach unten gebogen wird und wobei ein zweiter Teil der Matte, der noch nicht durch den Bereich, der mit Führungsmitteln ausgestattet ist, hindurchbewegt wurde, in der Transportebene verbleibt.

Weiterhin kann das Verfahren das Stützen des mindestens einen Gegenstands mittels eines Schiebers umfassen, wenn der mindestens eine Gegenstand den Bereich erreicht, der mit den Führungsmitteln ausgestattet ist. Zudem kann der mindestens eine Gegenstand, vorzugsweise in der Transportebene, mittels des Schiebers geschoben werden.

Das Verfahren kann die Übergabe des mindestens einen Gegenstands an ein Förderband, eine Palette, einen Rollenförderer oder dergleichen umfassen.

Weiter kann bei einem Übergabeverfahren ein Gegenstand auf eine Position auf einer Matte, die elastisches Material und evtl. Versteifungen umfasst, übergeben werden. Die Matte wird dabei aus einem Bereich, in dem die Matte gekrümmt ist, in die Transportebene bewegt. Auf den Bereich, in dem sich die Matte in der Transportebene befindet, kann der Gegenstand vorzugsweise übergeben werden. Der Gegenstand kann von einem Förderband, einer Palette einem Rollenförderer, einer Rutsche oder einer Neigung kommen. Er kann dabei auch von einem Schieber bewegt werden. Durch den Schieber oder eine Neigung oder einen Förderer ist es möglich den Gegenstand mit der gleichen Geschwindigkeit (bis auf 10%) zu bewegen, wie die Matte. Dadurch ergibt sich ein ruckfreies Übergeben des Gegenstandes ohne ein Gefahr, dass der Gegenstand kippen würde.

Um die Beschreibung der Erfindung zu vervollständigen und um eine Hilfe zu einem besseren Verständnis der Merkmale der Erfindung gemäß Beispielen bevorzugter Ausführungsformen zu geben, sind Zeichnungen beigefügt, die zum Zwecke der Erklärung und in nicht einschränkender Weise, das Folgende zeigen:
- Figur 1A:: eine Matte in einer ersten Ausführungsform,
- Figur 1B:: eine Matte in einer zweiten Ausführungsform,
- Figur 2A:: Biegung der ersten Ausführungsform mit einem ersten Krümmungsbogen,
- Figur 2B:: die Verformung der ersten Ausführungsform in x-z-Richtung,
- Figur 2C:: die Verformung der ersten Ausführungsform in y-z-Richtung,
- Figur 3A:: Biegung der ersten Ausführungsform mit einem zweiten Krümmungsbogen in der 2. Ebene, die von den Achsen z und y aufgespannt wird,
- Figur 3B:: die Verformung der ersten Ausführungsform in x-z-Richtung,
- Figur 3C:: die Verformung der ersten Ausführungsform in y-z-Richtung,
- Figur 4:: eine Ansicht einer Übergabestation,
- Figuren 5A bis 5D:: ein Gebinde auf dem Weg von einer Matte durch eine Übergabestation, und
- Figuren 6A bis 6C:: ein Gebinde auf dem Weg durch eine Übergabestation auf eine Matte.

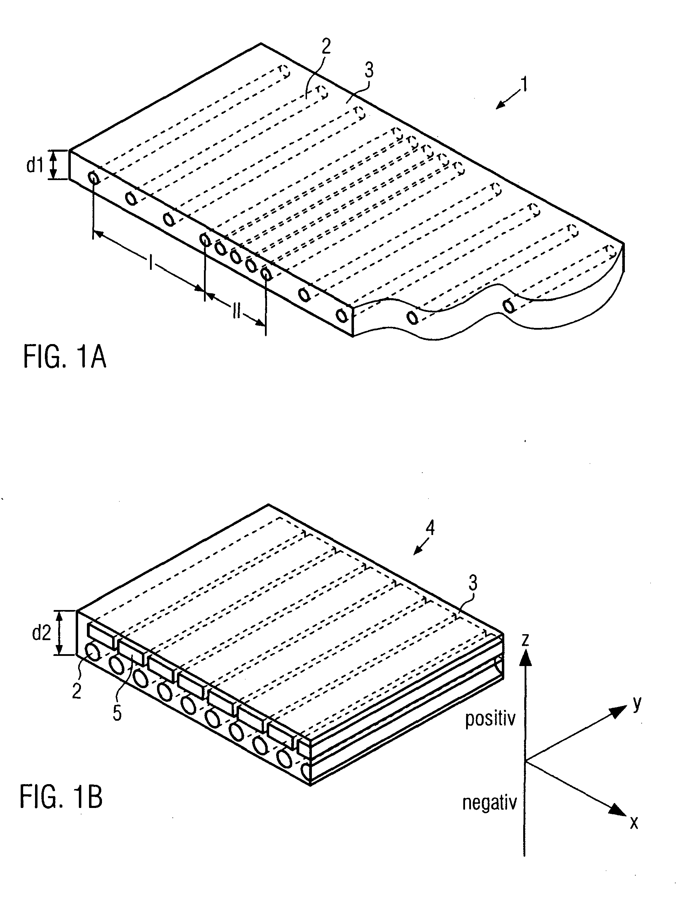

Figur 1A zeigt eine Ansicht einer Ausführungsform einer Matte 1 für den Transport von mindestens einem Gegenstand. Die dargestellte Matte 1 weist eine quaderförmige Form mit einer Dicke d1 auf und umfasst Versteifungen 2, die von einem elastischen Material 3 zumindest teilweise umgeben sind. Die Versteifungen 2 sind entlang ihrer Längsausrichtung von dem elastischen Material 3 umgeben. An den Stirnseiten enden die Versteifungen 2 im Bereich von Seitenflächen der Matte 1 und sind dort nicht von dem elastischen Material 3 umgeben. Es kann aber auch vorgesehen sein, dass die Versteifungen 2 innerhalb der Matte 1 und damit innerhalb des elastischen Materials 3 enden, so dass die Versteifungen 2 auch an ihren Stirnseiten von dem elastischen Material 3 umgeben sind. Dies kann vorteilhaft sein, wenn die Matte 1 beispielsweise bei der Vorwärtsbewegung auf einem Rollenförderer einer seitlichen Führung unterliegt, da dann das gleiche und nicht wechselndes Material mit der seitlichen Führung in Kontakt kommt.

Die Versteifungen 2 sind parallel zueinander ausgerichtet und weisen zueinander einen Mitte-zu-Mitte Abstand auf, der im Verhältnis zu dem Durchmesser der Versteifungen 2 und/oder der Dicke d1 der Matte 1 und/oder zu dem zu transportierenden mindestens einen Gegenstand gewählt werden kann. In der gezeigten Ausführungsform umfasst die Matte 1 zwei Bereiche I, II, in denen benachbarte Versteifungen 1 unterschiedliche Mitte-zu-Mitte Abstände aufweisen. In dem ersten Bereich I ist der Mitte-zu-Mitte Abstand größer als der im zweiten Bereich II.

Der Mitte-zu-Mitte Abstand der einzelnen Versteifungen 2 untereinander kann entsprechend der zu transportierenden Gegenstände gewählt werden. Je nach der Masse pro Flächeneinheit, die ein Gegenstand ausübt, kann ein größerer oder ein kleinerer Mitte-zu-Mitte Abstand der Versteifungen 2 erforderlich sein. Auch die Stabilität der Versteifungen 2 kann durch ihre Dicke bzw. ihre Struktur entsprechend beeinflusst werden.

Figur 1B zeigt eine zweite Ausführungsform einer Matte 4 mit einer Dicke d2 für den Transport von mindestens einem Gegenstand. Hierbei umfasst die Matte 4 neben den Versteifungen 2 noch Elemente 5, die sich in einer Ebene zwischen den Versteifungen 2 und der Oberfläche der Matte 4 befinden. Auch diese Elemente 5 sind zumindest teilweise von dem elastischen Material 3 umgeben. Diese Elemente 5 sind ebenfalls parallel zueinander ausgerichtet, wobei der Mitte-zu-Mitte Abstand der Elemente 5 bzw. die Größe der Elemente 5 so gewählt wird, dass der Abstand zwischen den Elementen 5 kleiner sein kann als der Abstand zwischen den Versteifungen 2. In der Darstellung weisen die Elemente 5 eine quaderförmige Struktur auf; andere geeignete Strukturen sind aber auch möglich. Die Elemente 5 können das gleiche Material wie die Versteifungen 2 oder aber auch andere Materialien umfassen.

Durch die zusätzlichen Elemente 5 wirken die Versteifungen 2, das elastische Material 3 und die zusätzlichen Elemente 5 in einer solchen Weise zusammen, dass die Matte 4 in einer Ebene, die senkrecht zu der Längsrichtung (y-Achse) der Versteifungen 2 und z.B. parallel zu der Mattenoberseite verläuft, mit verschiedenem Kraftaufwand gebogen werden kann. Wird die x-y-Ebene eines kartesischen Koordinatensystems beispielsweise durch die Längsrichtungen (y-Achse) der Versteifungen 2 gelegt und die z-Achse ist senkrecht zur Mattenoberseite in den Bereich der Matte gerichtet, der die Elemente 5 umfasst, so lässt sich ein Krümmungsbogen in die negative z-Richtung (Krümmung mit konkaver Seite nach unten) mit kleinerem Kraftaufwand erzeugen als ein Krümmungsbogen in die positive z-Richtung (Krümmung mit konkaver Seite nach oben), da die Elemente 5 eine Kompression der Matte (d.h. des elastischen Materials in diesem Bereich) oberhalb der Versteifungen 2 erschweren. Die Matte kann gemäß einer Ausführungsform bei Krümmung der Matte in entgegengesetzten Richtungen verschiedene Biegungssteifigkeiten aufweisen.

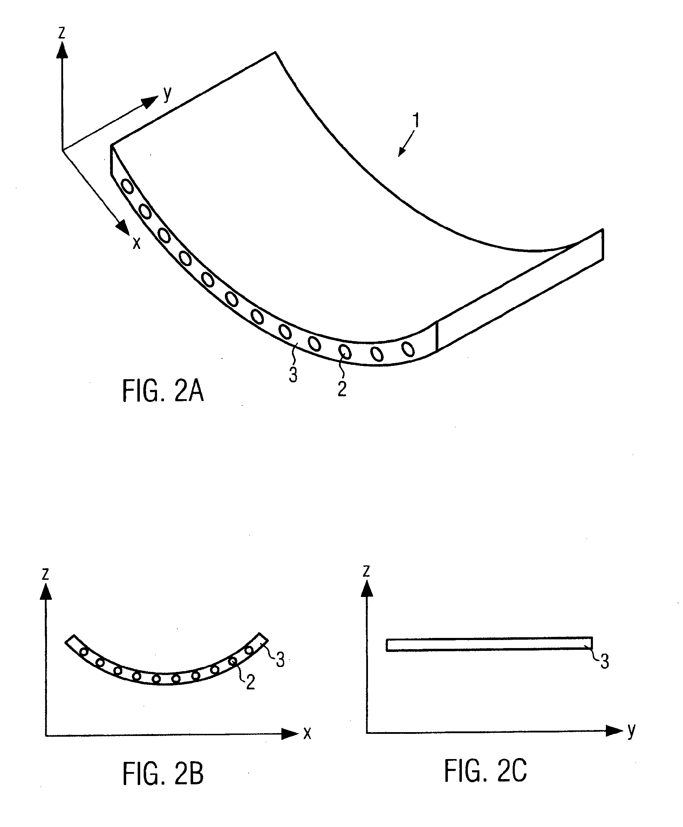

In Figur 2A ist eine Matte 1 der ersten Ausführungsform dargestellt, die mit einem ersten Krümmungsbogen in einer x-z-Ebene gebogen ist, die senkrecht zu der Längsausdehnung der Versteifungen 2 (y-Achse) verläuft. Die Figuren 2B und 2C zeigen die Ansicht der Matte in einem Schnitt in der x-z-Ebene bzw. in einem Schnitt in der y-z-Ebene.

In der x-z-Ebene kann eine Biegung der Matte 1 durch das elastische Material 3 erfolgen, das die Versteifungen 2 zumindest teilweise umgibt. In der y-z-Ebene findet keine Biegung der Matte 1 statt.

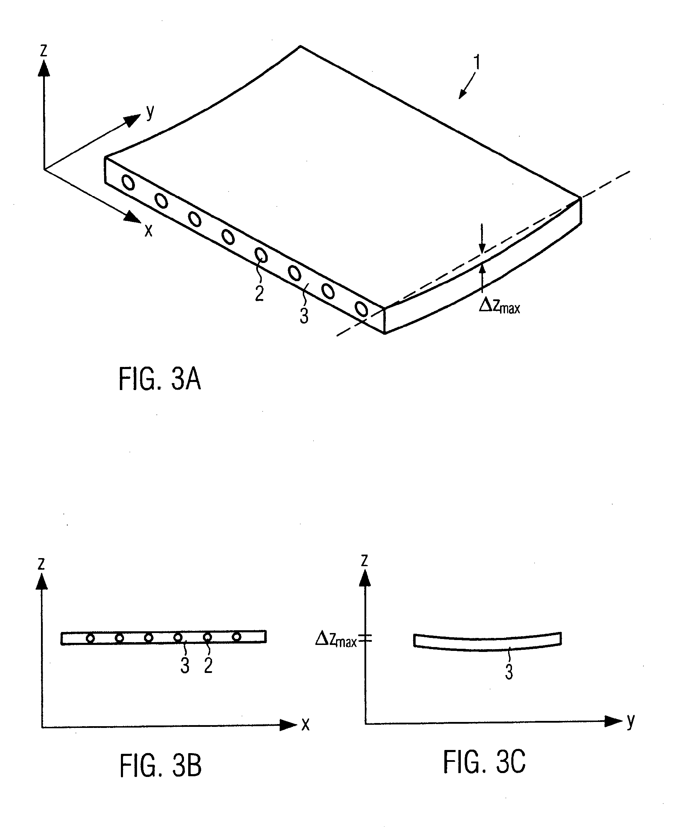

In Figur 3A ist eine Matte 1 der ersten Ausführungsform dargestellt, die mit einem ersten Krümmungsbogen in einer Ebene gebogen ist, die senkrecht zu der Längsausdehnung der Versteifungen 2 (y-Achse) verläuft. Die Figuren 3B und 3C zeigen die Ansicht der Matte in einem Schnitt in der x-z-Ebene bzw. in einem Schnitt in der y-z-Ebene.

In der y-z-Ebene wird die Biegemöglichkeit der Matte 1 durch die in ihr umfassten Versteifungen 2 eingeschränkt, so dass in einer Richtung parallel zu der Längsrichtung (y-Achse) der Versteifungen 2 nur eine eingeschränkte Biegung möglich ist. Bei einer Biegung der Matte 1, die zu einer Verformung in z-Richtung um mehr als Δzₘₐₓ führen würde, würde es zu einer plastischen Verformung der Versteifungen 2 kommen und somit würde sich die Matte 1 in keinem bzw. nur noch in einem eingeschränkt möglichen Einsatzzustand befinden.

In der x-z-Ebene (Figur 3B) erfolgt keine Biegung der Matte 1.

Die Eigenschaften der Matte 1, die in den Figuren 2A bis 3C dargestellt sind, geben das gewünschte Verhalten einer solchen Matte 1 wieder. Bei der Einwirkung einer äußeren Kraft lässt sich die Matte in der x-z-Ebene leichter verformen als in der y-z-Ebene. Dies kann für den Transport von Gegenständen vorteilhaft sein.

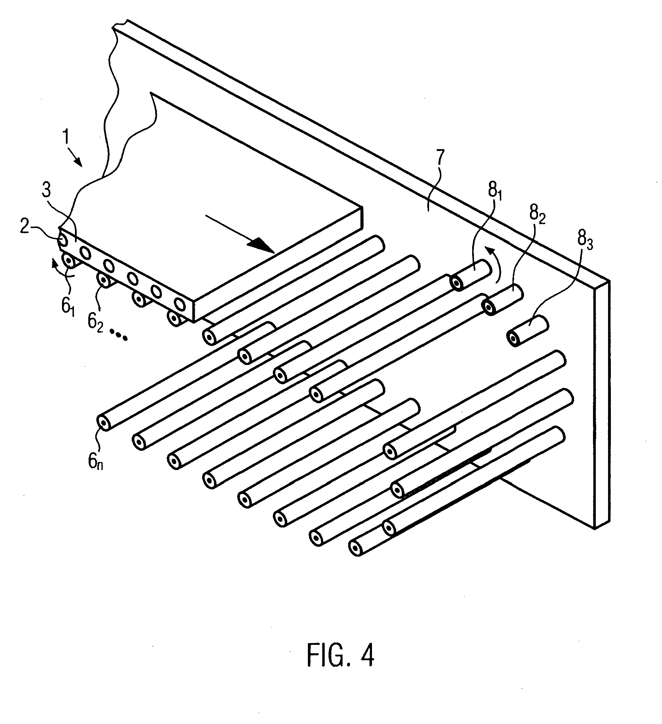

In Figur 4 ist eine Ansicht einer Übergabevorrichtung gezeigt. Eine Matte 1 der ersten Ausführungsform wird auf einem Rollenförderer mittels Rollen 6₁...6ₙ vorwärts bewegt. Die Rollen 6₁...6ₙ können beispielsweise an einer seitlichen Begrenzung 7 angebracht sein, wobei diese Begrenzung 7 weiterhin auch für eine seitliche Führung der Matte 1 sorgen kann. Um eine Rückführung der Matte 1 zu ermöglichen weist die Übergabestation Führungsrollen 8₁... 8₃ auf, die ein Umlenken der Matte 1 aus der Ebene des Rolleförderers hinaus einleiten. Mittels der Führungsrollen 8₁... 8₃ kann eine äußere Kraft auf die Matte 1 ausgeübt werden, so dass die Matte 1 mit einem Krümmungsbogen, der in einer Ebene senkrecht zu der Längsrichtung (y-Achse) der Versteifungen 2 verläuft gebogen werden kann. Statt Führungsrollen 8 können auch andere Führungsmittel wie Kulissen oder Bänder vorgesehen sein. Nachdem die Matte 1 aus der Ebene des Rollenförderers hinausgebogen ist, kann die Matte 1 unter Verwendung weiterer Rollen vorwärts und so beispielsweise zu einer Stelle transportiert werden, an der die Matte 1 erneut für den Transport von mindestens einem Gegenstand verwendet werden kann.

Die Führungsrollen 8₁... 8₃ können einen Durchmesser aufweisen, der größer oder gleich oder kleiner ist als der der Rollen 6. Die Länge (in Achsrichtung gemessen) der Führungsrollen 8₁... 8₃ ist kürzer als die der Rollen 6, da diese sich über die Förderbreite erstrecken, die Führungsrollen 8₁... 8₃ jedoch nur an den Seiten vorgesehen sind. In Fig. 4 sind nur die Führungsrollen 8₁... 8₃ auf einer in Fig. 4 hinteren Seite des Förderers dargestellt. Entsprechende Führungsrollen sind auch auf der vorderen Seite vorgesehen, der Übersichtlichkeit halber jedoch hier nicht dargestellt.

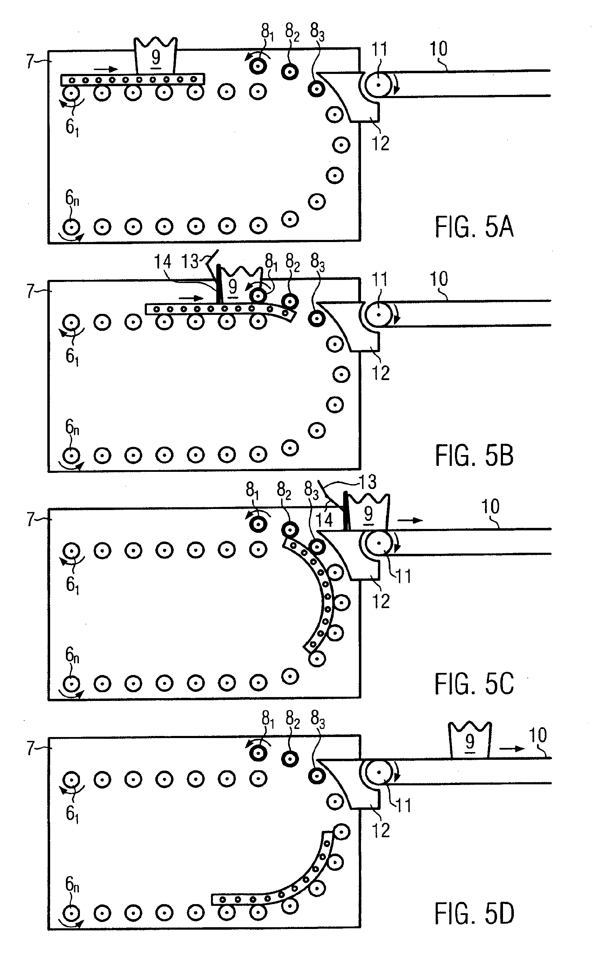

Wie eine Übergabe eines Gebindes von einer Matte 1 an ein Förderband 10 erfolgen kann, wird im Folgenden anhand der Figuren 5A bis 5D gezeigt.

In den Figuren 5A bis 5D ist gezeigt wie ein Gebinde 9 mittels einer Matte 1 entlang eines Rollenförderers mit Rollen 6₁...6ₙ und einer seitlichen Begrenzung 7 transportiert werden kann. In den Figuren ist nur die seitliche Begrenzung 7 gezeigt, die sich in der Bildebene hinter der Matte 1 und dem Gebinde 9 befindet; die seitliche Begrenzung, die sich in der Bildebene vor der Matte 1 und dem Gebinde 9 befindet, wurde der Übersichtlichkeit halber weggelassen. Durch Drehung der Rollen 6₁...6ₙ wird die Matte 1 in Richtung einer Transportrichtung voranbewegt, und die Matte 1 zusammen mit dem Gebinde 9 wird relativ zu dem Rollenförderer bewegt (in der Darstellung erfolgt der Transport des Gebindes 9 von links nach rechts).

Während hier eine Matte wie sie oben beschrieben wurde, eingesetzt werden kann, ist es auch möglich einfachere Matten, einzusetzen, die zwar elastisches Material umfassen, jedoch keine Versteifungen. Das Biegeverhalten des Materials solcher Matten ist in zwei verschiedenen Ebenen beispielsweise gleich.

Figur 5A zeigt wie die Matte 1 mittels des Rollenförderers durch Drehung der Rollen 6₁...6ₙ auf die Übergabestation zu bewegt wird. Ein auf der Oberfläche der Matte 1 befindliches Gebinde 9 wird entsprechend zusammen mit der Matte vorwärts bewegt. Wenn die Matte 1 ein Ende des Rollenförderers erreicht, kann die Matte 1 unter Verwendung der Führungsrollen 8₁... 8₃, die eine äußere Kraft auf die Matte 1 ausüben, aus einer Transportebene hinaus bewegt werden.

In dem dargestellten Fall verläuft die Transportebene parallel zu der Längsausdehnung der Rollen 6₁...6ₙ bzw. auch parallel zu der Längsausdehnung der Versteifungen 2 (d.h. senkrecht zu der Zeichenebene) und durch die Mittelebene der Matte 1.

Durch die Kraftübertragung der Führungsrollen 8₁... 8₃ kann, wie in Figur 5B dargestellt, die Matte 1 nach unten weggekrümmt werden, so dass eine Übergabe des Gebindes 9 an ein Förderband 10, das mittels einer Rolle 11 voranbewegt werden kann, erfolgen kann. Die Führungsrollen 8₁... 8₃ sind hierbei (wie in Figur 4 dargestellt) so ausgebildet, dass sie eine begrenzte Länge aufweisen und sich nicht über die gesamte Breite des Rollenförderers erstrecken. Somit wird der Transport des Gebindes 9 durch die Führungsrollen 8₁... 8₃ nicht behindert, und das Gebinde 9 kann daher ungehindert zwischen den Führungsrollen 8₁... 8₃, die jeweils auf gegenüberliegenden Seiten des Rollenförderers an den seitlichen Begrenzungen 7 angebracht sind, hindurch bewegt werden.

Da die Matte 1 Versteifungen 2 umfasst, die senkrecht zu der Transportrichtung ausgerichtet sind, ist es möglich, wie oben erwähnt, eine Kraft mittels dieser Führungsrollen 8₁... 8₃ in einem Randbereich der Oberfläche der Matte 1 auf die Matte 1 zu übertragen. Durch die Versteifungen 2 wird ein Aufwölben der Matte 1 in einem Bereich zwischen den Führungsrollen 8₁... 8₃ verhindert. Wären keine Versteifungen vorhanden, so könnte sich eine Matte, wenn sie aus elastischem Material besteht, aufwölben, da im Bereich zwischen den Führungsrollen 8₁... 8₃ keine Kraft von oben auf die Oberfläche der Matte übertragen wird.

Wie in den Figuren 5A bis 5D gezeigt, sind die Führungsrollen 8₁... 8₃ hierbei in Richtung der Transportrichtung an aufeinanderfolgenden Positionen angeordnet, wobei eine erste Führungsrolle 8₁ auf die Oberfläche der Matte 1 einwirkt und somit eine Kraft überträgt, während sich die gesamte Matte 1 noch in der Transportebene befindet. Eine zweite Führungsrolle 8₂ ist rechts von der ersten Führungsrolle 8₁ angeordnet und befindet sich unterhalb der ersten Führungsrolle 8₁, so dass diese zweite Führungsrolle 8₂ eine Kraft von oben auf die Oberfläche der Matte 1 ausübt, wodurch die Matte 1 aus der Transportebene nach unten weggekrümmt wird. Eine dritte Führungsrolle 8₂ ist rechts von der zweiten Führungsrolle 8₂ angeordnet und befindet sich unterhalb der zweiten Führungsrolle 8₂. Somit kann auf die Oberfläche der schon nach unten weggekrümmten Matte 1 eine weitere Kraft ausgeübt werden, welche die Matte 1 weiterhin nach unten wegkrümmt.

Die nach unten weggekrümmte Matte 1 kann mittels Rollen 6₁...6ₙ in einer Ebene unterhalb der Transportebene beispielsweise zu einem Ausgangspunkt, wo nicht verwendete Matten 1 gelagert werden können, zurücktransportiert werden. Die Rollen 6, die sich an die Führungsrollen 8 anschließen können sich wieder über die gesamte Breite des Förderers erstrecken. Um das Gebinde nach Abtauchen der Matte 1 an das Förderband 10 zu übergeben, ist ein Schieber 14 mit einem beweglichen Arm 13 vorgesehen, der das Gebinde 9 von der Matte 1 auf das Förderband 10 schiebt. Es kann auch vorgesehen sein, dass der Schieber 14 das Gebinde 9 stützt, in dem der Schieber 14 dem Gebinde 9 mittels des beweglichen Arms 13 bei der Vorwärtsbewegung des Gebindes 9 auf der Matte 1 folgt. Um einen möglicher Weise vorhandenen Abstand zwischen dem Bereich der abtauchenden Matte 1 und dem Förderband 10 zu überbrücken, kann eine Stützstruktur 12 vorgesehen sein, die beispielsweise verhindert, dass sich ein Gebinde in diesem Bereich verkeilt. Damit das Gebinde 9 diese Stützstruktur 12 ohne Probleme passieren kann, kann der Schieber 14 das Gebinde 9 neben seiner stützenden Funktion nun in Richtung und auf das Förderband 10 schieben.

Vorteilhafter Weise haben die Matte 1 und das Förderband 10 die gleiche Geschwindigkeit, so dass es bei der Übergabe des Gebindes zu keiner Beschleunigung oder Abbremsung des Gebindes 9 kommt, was zu einer instabilen Lage des Gebindes 9 führen könnte. Allerdings können die Matte 1 und das Förderband 10 auch unterschiedliche Geschwindigkeiten aufweisen, da der Schieber 14 bei der Übergabe dem Gebinde eine Stabilität geben kann, wenn der Schieber 14 zum Beispiel eine solche Form und Größe aufweist, dass das Gebinde 9 beispielsweise an einer Seitenfläche gestützt werden kann.

Nach Abschluss der Übergabe des Gebindes 9 an das Förderband 10 (Figur 5D), d.h., das Gebinde 9 befindet sich dann mit seiner Standfläche vollständig auf dem Förderband 10, endet die Übergabe des Gebindes 9 mittels des Schiebers 14.

Es ist auch möglich, dass das Gebinde 9 (statt an ein Förderband 10) an eine Palette oder eine andere Einrichtung übergeben wird, wobei sich die Palette (oder eine andere Einrichtung) in Ruhe befinden kann. Ebenso kann das Gebinde 9 an einen weiteren Rollenförderer übergeben werden oder auch an eine andere Matte 1, 4.

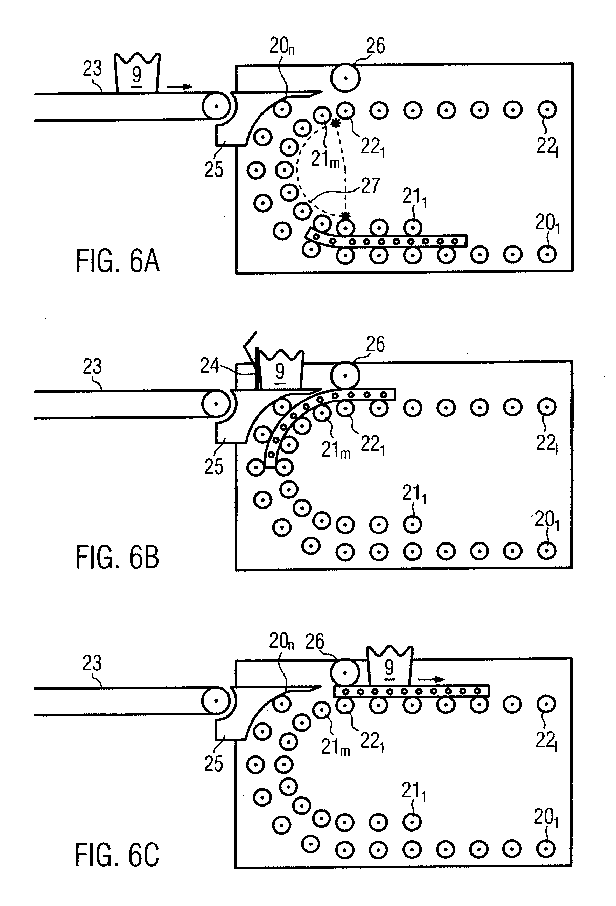

Fig. 6 zeigt eine Übergabevorrichtung zur Übergabe von einem Gegenstand auf eine Matte. Die Matte kann eine oben beschriebene Matte (mit Versteifungen) sein oder auch eine einfachere Matte, also eine ohne Versteifungen.

Die Übergabevorrichtung umfasst Rollen 20₁ bis 20ₙ mit denen eine Matte geführt bzw. bewegt werden kann. Zumindest einige der Rollen sind antreibbar, so dass damit die Matte bewegt werden kann. Die Matte kann zwischen Gruppen von Rollen 20₁ bis 20ₙ und 21₁ bis 21ₘ geführt werden, die sich auf gegenüberliegenden Seiten der Bahn einer Matte befinden und an gegenüberliegende Seiten einer Matte angreifen können. Damit kann eine Matte stabil geführt bzw. gefördert werden, auch wenn die Matte in eine senkrechte Position geführt wird oder gewendet wird (Oberseite nach unten und Unterseite nach oben). Auch können Rollen auf gegenüberliegenden Seiten der Bahn der Matte Rollenpaare bilden, von denen zumindest eine, vorzugsweise beide, angetrieben sind, um die Matte zu fördern. Die Matte kann zwischen zwei Rollen eines Rollenpaares eingeklemmt und unter dem dadurch erzeugten Druck geführt bzw. gefördert werden.

Die Übergabevorrichtung umfasst einen Bereich 27, in dem die Matte gekrümmt ist.

Weiterhin sind Rollen 22₁ bis 22ₗ vorgesehen, die eine Transportebene definieren, in der die Matte in einer ebenen (nicht gekrümmten) Lage transportiert werden kann.

Zwischen einem Zuförderer 23 und den Rollen 20, 21, 22 der Übergabestation kann eine Stützstruktur 25 vorgesehen sein, die den Bereich zwischen Zuförderer und Rollen überbrückt.

Gemäß Fig. 6A wird eine Matte unterhalb der Transportebene zugeführt. Der vordere Bereich der Matte wird bereits in dem Bereich 27 nach oben gekrümmt und nach oben bewegt. Auf dem Zuförderer 23 läuft ein Gegenstand 9 ein, der auf eine Position auf der Matte übergeben werden soll.

In Fig. 6B ist gezeigt, wie die Matte bereits weiter nach oben gefördert wurde und dabei gewendet wird. Das vordere Ende der Matte befindet sich bereits in der Transportebene und ist eben. Auf der dann Oberseite der Matte wird der Gegenstand 9 aufgebracht, beispielsweise mittels eines Schiebers 24. Der hintere Teil der Matte ist im Bereich 27 noch gekrümmt. Er läuft unterhalb des Gegenstandes 9 in die Transportebene ein.

In Fig. 6C ist dargestellt wie die Matte insgesamt in die Transportebene gebracht wurde und nun eben transportiert wird. Auf der Matte befindet sich der übergebene Gegenstand 9.

In Fig. 6B ist eine Rolle 26 gezeigt, die beispielsweise am Rand der Förderbahn vorgesehen sein kann. Zwei solcher Rollen 26 können in Förderrichtung der Matten gesehen auf der rechten und linken Seite der Bahn der Matten vorgesehen sein und helfen die Matte aus dem Bereich 27, in dem die Matte gekrümmt ist, heraus eben in die Transportebene zu bewegen. Dabei drücken die Rollen 26 die Matte nach unten, so dass diese nicht aufreitet, sondern vielmehr eben in die Transportebene kommt. Die Rollen 26 greifen dabei auf der Oberseite der Matten an. Es können mehreren Rollenpaare 26 (jeweils eine Rolle des Paares 26 rechts und links) entlang der Bahn der Matten vorgesehen sein, um eine bessere Führung der Matten zu erreichen. Die Gegenstände 9 können zwischen zwei Rollen 26, von denen jeweils eine auf der rechten und linken Seite der Bahn der Matten vorgesehen sind, hindurch laufen. Statt oder zusätzliche zu einem Schieber 24 kann auch die Stützstruktur 25 geneigt ausgebildet sein. Sie kann auch selber Rollen aufweisen, auf denen der Gegenstand 9 durch die Schwerkraft nach unten gleitet.

## Patentansprüche

1. Eine Matte (1, 4) für den Transport von mindestens einem Gegenstand, vorzugsweise von mindestens einem Gebinde in der Lebensmittelindustrie, auf einer Oberfläche der Matte (1, 4), wobei die Matte (1, 4) elastisches Material (3) umfasst,
**dadurch gekennzeichnet, dass**
- in der Matte (1, 4) Versteifungen (2) vorgesehen sind, die von dem elastischen Material (3) zumindest teilweise umgeben sind, und
- die Versteifungen (2) parallel oder annähernd parallel zueinander ausgerichtet
sind,
wobei das elastische Material (3) und die Versteifungen (2) so zusammenwirken, dass eine Biegung der Matte (1, 4) mit einem ersten Krümmungsbogen in einer ersten Ebene unter geringerem Kraftaufwand erfolgen kann als mit einem zweiten Krümmungsbogen der gleich Form jedoch in einer zweiten Ebene, wobei die erste Ebene und die zweite Ebene verschieden sind.

2. Die Matte nach Anspruch 1, wobei sich eine Richtung einer Längsausdehnung der Versteifungen (2) senkrecht oder annähernd senkrecht zu der ersten Ebene erstreckt und/oder
wobei die Versteifungen (2) parallel oder annähernd parallel zu einer Kante der Oberfläche der Matte (1, 4) verlaufen und vorzugsweise die Länge dieser Kante aufweisen und/oder
wobei benachbarte Versteifungen (1) jeweils einen gleichen Mitte-zu-Mitte Abstand aufweisen oder wobei benachbarte Versteifungen (1) unterschiedliche Mitte-zu-Mitte Abstände aufweisen.

3. Die Matte nach einem der Ansprüche 1 oder 2, wobei
die Versteifungen aus Metall bestehen oder Metall umfassen
oder
wobei die Versteifungen aus kohlestofffaserverstärktem Material bestehen oder kohlestofffaserverstärktes Material umfassen, und vorzugsweise weiterhin Metall umfassen
und/oder
wobei die Versteifungen aus Materialien mit höherem Härtegrad als der des elastischen Materials bestehen oder ein solches Material umfassen
und/oder
wobei die Versteifungen durch Hohlräume wie etwa Wabenstrukturen erzeugt werden und/oder
wobei die Versteifungen durch Gewebe oder Fasern erzeugt werden und/oder
wobei die Versteifungen (2) eine zylindrische, vorzugsweise kreiszylindrische, Form aufweisen.

4. Die Matte nach einem der Ansprüche 1 bis 3, wobei das elastische Material (3) auf der Oberfläche und/oder einer Unterfläche der Matte (1, 4) eine Haftreibungszahl im trockenen Zustand der Oberfläche und/oder der Unterfläche von mindestens 0,4, insbesondere von mindestens 0,6, und oder von maximal 0,8 aufweist.

5. Eine Übergabevorrichtung zum Übergeben eines Gegenstandes, vorzugsweise von mindestens einem Gebinde in der Lebensmittelindustrie, wobei die Übergabevorrichtung Mittel (6₁...6ₙ) zum Bewegen einer Matte (1, 4) nach einem der Ansprüche 1 bis 4 in einer Transportrichtung umfasst und der Gegenstand von einer Position auf der Matte aus an eine andere Position übergeben werden kann,
wobei die Übergabevorrichtung weiter Führungsmittel (8₁...8₃) für eine Führung der Matte (1, 4) aus einer Transportebene hinaus umfasst.

6. Die Übergabevorrichtung nach Anspruch 5, wobei die Führungsmittel (8₁...8₃) Führungsrollen (8₁...8₃) umfassen, wobei vorzugsweise die Führungsrollen (8₁...8₃) so angeordnet und ausgebildet sind, dass ein sich auf einer Oberfläche der Matte (1, 4) befindlicher Gegenstand (9) bei einem Transport mittels der Matte (1, 4) ungehindert transportiert werden kann.

7. Die Übergabevorrichtung nach einem der Ansprüche 5 oder 6, wobei die Übergabevorrichtung weiter einen Schieber (14) umfasst, der so ausgebildet ist, dass er den mindestens einen Gegenstand (9) von der Matte (1, 4) schieben kann, wobei der Schieber (14) vorzugsweise einen beweglichen Arm (13) umfasst.

8. Übergabevorrichtung zum Übergeben eines Gegenstandes, vorzugsweise von mindestens einem Gebinde in der Lebensmittelindustrie, wobei die Übergabevorrichtung Mittel (6₁...6ₙ) zum Bewegen einer Matte (1, 4) nach einem der Ansprüche 1 bis 4 in einer Transportrichtung umfasst und wobei der Gegenstand auf eine Position auf der Matte übergeben werden kann,
wobei die Übergabevorrichtung weiter Führungsmittel zum Führen einer Matte aus einem Bereich, in dem die Matte gekrümmt ist, in eine Transportebene hinein umfasst.

9. Übergabevorrichtung nach Anspruch 8, wobei die Führungsmittel die Matte aus einem Bereich unterhalb der Transportebene in die Transportebene führen können.

10. Übergabevorrichtung nach Anspruch 8 oder 9, wobei der Gegenstand auf den Teil der Matte übergeben werden kann, der sich in der Transportebene befindet.

11. Übergabevorrichtung nach Anspruch 8, 9 oder 10, wobei ein Schieber oder eine Neigung vorgesehen ist, mit der der Gegenstand auf die Matte übergeben werden kann.

12. Verfahren zur Übergabe von mindestens einem Gegenstand (9), vorzugsweise von mindestens einem Gebinde (9) in der Lebensmittelindustrie, wobei sich der mindestens eine Gegenstand (9) auf einer Oberfläche einer Matte (1, 4) nach einem der Ansprüche 1 bis 4 befindet, wobei das Verfahren die folgenden Schritte umfasst:
- Bewegen der Matte (1, 4) in einer Transportebene und in einer Transportrichtung, und
- Bewegen der Matte (1, 4) durch einen Bereich, der mit Führungsmitteln (8₁...8₃) ausgestattet ist, und dabei Ausüben einer Kraft über mindestens einen Teil der Oberfläche der Matte (1, 4) auf die Matte (1, 4) mittels der Führungsmittel (8₁...8₃),
wodurch ein erster Teil der Matte (1, 4), der durch den Bereich, der mit Führungsmitteln (8₁...8₃) ausgestattet ist, hindurchbewegt wurde, aus der Transportebene hinaus nach unten gebogen wird und
wobei ein zweiter Teil der Matte (1, 4), der noch nicht durch den Bereich, der mit Führungsmitteln (8₁...8₃) ausgestattet ist, hindurchbewegt wurde, in der Transportebene verbleibt.

13. Das Verfahren nach Anspruch 12, weiter umfassend den Schritt: Stützen des mindestens einen Gegenstands (9) mittels eines Schiebers (14), wenn der mindestens eine Gegenstand (9) den Bereich erreicht, der mit den Führungsmitteln (8₁...8₃) ausgestattet ist.

14. Das Verfahren nach Anspruch 12 oder 13, weiter umfassend den Schritt: Schieben des mindestens einen Gegenstands (9), vorzugsweise in der Transportebene, mittels eines/des Schiebers (14).

15. Das Verfahren nach Anspruch 12, 13 oder 14, weiter umfassend den Schritt: Übergabe des mindestens einen Gegenstands (9) an ein Förderband (10), eine Palette oder einen Rollenförderer.

16. Verfahren zur Übergabe von mindestens einem Gegenstand (9), vorzugsweise von mindestens einem Gebinde (9) in der Lebensmittelindustrie, wobei der mindestens eine Gegenstand (9) auf eine Oberfläche einer Matte (1, 4) nach einem der Ansprüche 1 bis 4 übergeben wird, wobei das Verfahren die folgenden Schritte umfasst:
Bewegen der Matte (1, 4) aus einem Bereich, in dem die Matte gekrümmt ist, in eine Transportebene hinein.

17. Verfahren nach Anspruch 16, wobei Führungsmittel (26) vorgesehen sind, die eine Kraft auf die Matte ausüben, um diese aus einem gekrümmten Zustand in einen ebenen Zustand zu überführen.

18. Verfahren nach Anspruch 16 oder 17 wobei der Gegenstand geschoben wird oder sich auf einer geneigten Förderebene befindet, so dass der Gegenstand durch die Schwerkraft bewegt wird, um dann auf die Position auf der Matte zu kommen.

## Claims

1. A mat (1, 4) for the transport of at least one object, preferably of at least one container in the food industry, on a top surface of the mat (1, 4), wherein the mat (1, 4) comprises elastic material (3),
**characterised in that**
- reinforcements (2) are provided in the mat (1, 4) that are at least partially enclosed by the elastic material (3) and
- the reinforcements (2) are aligned parallel or approximately parallel to one another,
wherein the elastic material (3) and the reinforcements (2) interact in such a way that a flexing of the mat (1, 4) at a first arc of curvature in a first plane can take place with less force than at a second arc of curvature of the same shape, however in a second plane, wherein the first plane and the second plane are not the same plane.

2. The mat according to Claim 1 wherein a direction of a longitudinal extension of the reinforcements (2) extends perpendicular or approximately perpendicular to the first plane and / or
wherein the reinforcements (2) run parallel or approximately parallel to an edge of the top surface of the mat (1, 4) and preferably possess the length of this edge
and / or
wherein adjacent reinforcements (1) each possess an equal centre-to-centre distance or wherein adjacent reinforcements (1) possess different centre-to-centre distances.

3. The mat according to one of the Claims 1 or 2, wherein
the reinforcements are made of metal or comprise metal
or
wherein the reinforcements are made of carbon fibre-reinforced material or comprise carbon fibre-reinforced material, and furthermore preferably comprise metal
and / or
wherein the reinforcements are made of materials with a hardness grade that is bigger than
that of the elastic material or wherein the reinforcements comprise such a material and / or
wherein the reinforcements are produced by means of hollow spaces such as honeycomb structures
and / or
wherein the reinforcements are produced by means of woven materials or fibres and / or
wherein the reinforcements (2) possess a cylindrical, preferably circular-cylindrical, shape.

4. The mat according to one of the Claims 1 to 3 wherein the elastic material (3) on the top surface and / or a bottom surface of the mat (1, 4) possesses a coefficient of static friction in the dry state of the top surface and / or of the bottom surface of at least 0.4, particularly of at least 0.6, and / or of a maximum of 0.8.

5. A transfer device for transferring an object, preferably at least one container in the food industry, wherein the transfer device comprises means (6₁ ... 6ₙ) for moving a mat (1, 4) according to any one of Claims 1 to 4 in a transport direction and the object can be transferred out of a position on the mat to another position,
wherein the transfer device further comprises guidance means (8₁ ... 8₃) for guidance of the mat (1, 4) out of a transport plane.

6. The transfer device according to Claim 5 wherein the guidance means (8₁... 8₃) comprises guidance rollers (8₁... 8₃) wherein the guidance rollers (8₁ ...8₃) are preferably arranged and formed in such a way that an object (9) located on a top surface of the mat (1, 4) can be transported unhindered during a transport by means of the mat (1, 4).

7. The transfer device according to one of the Claims 5 or 6 wherein the transfer device further comprises a slide (14) that is formed in such a way that it can slide the at least one object (9) from the mat (1, 4) wherein the slide (14) preferably comprises a movable arm (13).

8. Transfer device for transferring an object, preferably at least one container in the food industry, wherein the transfer device comprises means (6₁ ... 6ₙ) for moving a mat (1, 4) according to any one of Claims 1 to 4 in a transport direction and wherein the object can be transferred on to a position on the mat,
wherein the transfer device further comprises guidance means for guiding a mat out of an area in which the mat is curved and into a transport plane.

9. Transfer device according to Claim 8 wherein the guidance means can guide the mat out of an area below the transport plane and into the transport plane.

10. Transfer device according to Claim 8 or 9 wherein the object can be transferred on to a portion of the mat that is located in the transport plane.

11. Transfer device according to Claim 8, 9 or 10 wherein a slide or down-grade is provided with which the object can be transferred on to the mat.

12. Method for transferring at least one object (9), preferably at least one container (9) in the food industry, wherein the at least one object (9) is located on a top surface of a mat (1, 4) according to any one of Claims 1 to 4, wherein the method comprises the following steps:
- moving the mat (1, 4) in a transport plane and in a transport direction and
- moving the mat (1, 4) through an area that is equipped with guidance means (8₁ ... 8₃) and at the same time exertion of a force across at least a portion of the top surface of the mat (1, 4) on to the mat (1, 4) by means of the guidance means (8₁ ... 8₃),
as a result of which a first portion of the mat (1, 4) that has been moved through the area that is equipped with the guidance means (8₁ ... 8₃) is flexed downwards out of the transport plane and
wherein a second portion of the mat (1, 4) that has not yet been moved through the area that is equipped with the guidance means (8₁ ... 8₃) remains in the transport plane.

13. The method according to Claim 12, further comprising the step: supporting of the at least one object (9) by means of a slide (14) when the at least one object (9) reaches the area that is equipped with the guidance means (8₁ ... 8₃).

14. The method according to Claim 12 or 13, further comprising the step: sliding the at least one object (9), preferably in the transport plane, by means of a / the slide (14).

15. The method according to Claim 12, 13 or 14, further comprising the step: transferring of the at least one object (9) to a conveyor belt (10), a pallet or a roller conveyor.

16. Method for transferring at least one object (9), preferably at least one container (9) in the food industry, wherein the at least one object (9) is transferred onto a top surface of a mat (1, 4) according to any one of Claims 1 to 4, wherein the method comprises the following steps:
moving the mat (1, 4) out of an area in which the mat is curved and into a transport plane.

17. Method according to Claim 16 wherein guidance means (26) are provided that exerts a force on the mat in order to transfer this mat into a flat state from a curved state.

18. Method according to Claim 16 or 17 wherein the object is slid or is located on a tilted conveyor plane so that the object is moved by gravity in order then to arrive at the position on the mat.

## Revendications

1. Un tapis (1, 4) pour le transport d'au moins un objet, de préférence d'au moins un emballage groupé dans l'industrie des produits alimentaires, sur une surface supérieure du tapis (1, 4), le tapis (1, 4) englobant un matériau élastique (3),
**caractérisé en ce que**
- dans le tapis (1, 4) sont prévus des renforts de rigidification (2), qui sont entourés au moins partiellement par le matériau élastique (3), et
- les renforts de rigidification (2) sont orientés parallèlement ou sensiblement de manière parallèle les uns aux autres,
le matériau élastique (3) et les renforts de rigidification (2) interagissent de manière telle, qu'une flexion du tapis (1, 4) avec un premier arc de courbure, dans un premier plan, peut s'effectuer par une mise en oeuvre de force plus faible que pour une flexion avec un deuxième arc de courbure de même forme, toutefois dans un deuxième plan, le premier plan et le deuxième plan étant différents.

2. Le tapis selon la revendication 1, dans lequel une direction d'un allongement des renforts de rigidification (2) s'étend perpendiculairement ou approximativement de manière perpendiculaire au premier plan
et/ou
dans lequel les renforts de rigidification (2) s'étendent parallèlement ou approximativement de manière parallèle à un bord de la surface supérieure du tapis (1, 4) et présentent de préférence la longueur de ce bord
et/ou
dans lequel des renforts de rigidification (2) voisins présentent respectivement une même distance d'espacement de centre à centre, ou dans lequel des renforts de rigidification (2) voisins présentent des distances d'espacement de centre à centre différentes.

3. Le tapis selon l'une des revendications 1 ou 2, dans lequel
les renforts de rigidification sont réalisés en métal ou renferment du métal
ou
dans lequel les renforts de rigidification sont réalisés un matériau renforcé de fibres de carbone ou renferment du matériau renforcé de fibres de carbone, et renferment de préférence toujours du métal
et/ou
dans lequel les renforts de rigidification sont réalisés en un matériau avec un degré de dureté plus élevé que celui du matériau élastique, ou renferment un tel matériau
et/ou
dans lequel les renforts de rigidification sont produits par des cavités telles que des structures en nid d'abeille
et/ou
dans lequel les renforts de rigidification sont produits par des tissus ou des fibres
et/ou
dans lequel les renforts de rigidification (2) présentent une forme cylindrique, de préférence cylindrique circulaire.

4. Le tapis selon l'une des revendications 1 à 3, dans lequel le matériau élastique (3) sur la surface supérieure et/ou la surface inférieure du tapis (1, 4) présente un coefficient d'adhérence, à l'état sec de la surface supérieure et/ou de la surface inférieure, d'au moins 0,4, notamment d'au moins 0,6 et/ou au maximum de 0,8.

5. Un dispositif de transfert destiné au transfert d'un objet, de préférence d'au moins un emballage groupé dans l'industrie des produits alimentaires, le dispositif de transfert comprenant des moyens (6₁...6ₙ) pour déplacer un tapis (1, 4) selon l'une des revendications 1 à 4, dans une direction de transport, et l'objet pouvant être transféré à partir d'une position sur le tapis, à une autre position,
le dispositif de transfert comprenant par ailleurs des moyens de guidage (8₁...8₃) pour guider le tapis (1, 4) de manière à le faire sortir hors d'un plan de transport.

6. Le dispositif de transfert selon la revendication 5, dans lequel les moyens de guidage (8₁...8₃) comprennent des rouleaux de guidage (8₁...8₃), les rouleaux de guidage (8₁...8₃) étant de préférence agencés et conçus de manière à ce qu'un objet (9) se trouvant sur une surface supérieure du tapis (1, 4), puisse être transporté sans entraves lors d'un transport au moyen du tapis (1, 4).

7. Le dispositif de transfert selon l'une des revendications 5 ou 6, comprenant, en outre, un coulisseau-poussoir (14) qui est conçu de manière à pouvoir pousser ledit au moins un objet (9) hors du tapis (1, 4), le coulisseau-poussoir (14) comportant de préférence un bras mobile (13).

8. Dispositif de transfert destiné au transfert d'un objet, de préférence d'au moins un emballage groupé dans l'industrie des produits alimentaires, le dispositif de transfert comprenant des moyens (6₁...6ₙ) pour déplacer un tapis (1, 4) selon l'une des revendications 1 à 4, dans une direction de transport, et l'objet pouvant être transféré à une position sur le tapis,
le dispositif de transfert comprenant en outre, des moyens de guidage pour guider un tapis d'une zone dans laquelle le tapis est courbé, et l'amener dans un plan de transport.

9. Dispositif de transfert selon la revendication 8, dans lequel les moyens de guidage peuvent guider le tapis à partir d'une zone située sous le plan de transport, pour l'amener dans le plan de transport.

10. Dispositif de transfert selon la revendication 8 ou la revendication 9, dans lequel l'objet peut être transféré sur la partie du tapis, qui se trouve dans le plan de transport.

11. Dispositif de transfert selon la revendication 8, 9 ou la revendication 10, dans lequel il est prévu un coulisseau-poussoir ou un plan incliné, à l'aide desquels l'objet peut être transféré sur le tapis.

12. Procédé de transfert d'au moins un objet (9), de préférence d'au moins un emballage groupé (9) dans l'industrie des produits alimentaires, ledit au moins un objet (9) se trouvant sur une surface supérieure d'un tapis (1, 4) selon l'une des revendications 1 à 4, le procédé comprenant les étapes suivantes :
- déplacement du tapis (1, 4) dans un plan de transport et dans une direction de transport, et
- déplacement du tapis (1, 4) à travers une zone, qui est équipée de moyens de guidage (8₁...8₃), en exerçant à cette occasion une force sur le tapis (1, 4), au moins sur une partie de la surface supérieure du tapis (1, 4), à l'aide des moyens de guidage (8₁...8₃),
une première partie du tapis (1, 4), qui a été déplacée à travers la zone équipée de moyens de guidage (8₁...8₃), étant ainsi courbée vers le bas, hors du plan de transport, et
une deuxième partie du tapis (1, 4), qui n'a pas encore été déplacée à travers la zone équipée de moyens de guidage (8₁...8₃), restant dans le plan de transport.

13. Le procédé selon la revendication 12, comprenant, en outre, l'étape : appui de soutien dudit au moins un objet (9) au moyen d'un coulisseau-poussoir (14), lorsque ledit au moins un objet (9) atteint la zone, qui est équipée des moyens de guidage (8₁...8₃).

14. Le procédé selon la revendication 12 ou la revendication 13, comprenant, en outre, l'étape consistant à pousser ledit au moins un objet (9), de préférence dans le plan de transport, au moyen d'un/du coulisseau-poussoir (14).

15. Le procédé selon la revendication 12, 13 ou la revendication 14, comprenant, en outre, l'étape : transfert dudit au moins un objet (9) à une bande de transport (10), une palette ou un transporteur ou convoyeur à rouleaux.

16. Procédé de transfert d'au moins un objet (9), de préférence d'au moins un emballage groupé (9) dans l'industrie des produits alimentaires, ledit au moins un objet (9) étant transféré sur une surface supérieure d'un tapis (1, 4) selon l'une des revendications 1 à 4, le procédé comprenant les étapes suivantes :
- déplacement du tapis (1, 4) à partir d'une zone dans laquelle le tapis est courbé, pour l'amener dans un plan d'un transport.

17. Procédé selon la revendication 16, d'après lequel sont prévus des moyens de guidage (26), qui exercent une force sur le tapis, pour amener celui-ci d'un état courbé dans un état plan.

18. Procédé selon la revendication 16 ou la revendication 17, d'après lequel l'objet est poussé ou se trouve sur un plan incliné de transport, de sorte que l'objet est déplacé par gravité, pour arriver ensuite à la position sur le tapis.
